# EUROPEAN PATENT APPLICATION

(11) **EP 0 772 151 A2**
(43) Date of publication of application: **07.05.1997**
(21) Application number: 96308076.7
(22) Date of filing: 05.11.1996
(51) Int. Cl.: G06K 19/06

(54) **Two-dimensional code symbol**

(30) Priority: 06.11.1995 JP 309731/95; 18.01.1996 JP 23410/96
(71) Applicant: Nagashio, Kichinosuke, Tokyo 150 (JP)
(72) Inventor: Nagashio, Kichinosuke, Tokyo 150 (JP)
(74) Representative: Needle, Jacqueline

(57) **Abstract**

In reception/shipment management of articles (1), reception/shipment management marks (2) are printed on each article. Each management mark (2) consists of a two-dimensional code symbol which includes a plurality of nested polygonal elements of different sizes, each of which represents information for management. Each side of each polygonal element is selectively cut or left uncut so as to represent a binary digit. Examples of the information for management includes a product name, a product number, a delivery destination, and a product origin. When each article is received, the management marks are detected and decoded so as to obtain the above-described information, based on which articles are to be shipped.

## Description

### BACKGROUND OF THE INVENTION

### Field of the Invention:

The present invention relates to a novel two-dimensional code symbol that is simple and useful for managing articles or information. The present invention also relates to a method and apparatus for managing reception and shipment of articles that manage arrival/shipment, inventory, or the like, of merchandise, products, material, or any other kind of articles, through use of such a two-dimensional code symbol.

### Description of the Related Art:

Conventionally, in a physical distribution center, warehouse, or a like facility, where products are handled, each individual article (a packaged product transported on a belt conveyer) has been managed through use of a code mark for automatic recognition. That is, a labeling mark is printed directly onto a package such as a carton, or a label having a labeling mark printed thereon is attached to the package. The labeling mark is read out and is subjected to computer processing, thereby making it possible to perform management of reception/shipment, inventory, replenishment (order), or the like of merchandise or products.

As such a labeling mark for automatic recognition, there has been used a bar code system. In the bar code system, it has been determined, as a standard, that each character is represented by 7 modules each having a width of 0.33 mm. The ratio of magnification is also limited to 2, and the magnification must be performed such that the ratio between the widths of modules is maintained. In such bar code symbols, since the width of each bar and the interval between adjacent bars represent coded data, a high degree of printing accuracy is required. Moreover, increasing the interval between bars at one's discretion so as to facilitate reading is not allowed, nor is printing bars roughly.

Accordingly, it has been difficult to use a simple reading means such as a TV camera to accurately read, from the front side, a bar code symbol on a label attached to an article being transported on a belt conveyer, so as to accurately decode coded data.

Examples of products include farm products, marine products, and processed products thereof; mining and manufacturing products; and parts manufactured at plants. Among a large number of products, some products arrive in a state in which their bar code symbols cannot be read due to, for example, dirt on their labels. In such a case, a person in charge must stop a line and clean dirt from the labels so as to make it possible to read out bar code symbols.

### SUMMARY OF THE INVENTION

An object of the present invention is to provide a simple two-dimensional code symbol suitable for management of products or information (hereinafter referred to as a "management mark").

Another object of the present invention is to provide a method and apparatus for managing reception/shipment of articles through use of such a management mark.

The present invention provides a two-dimensional code symbol used for managing articles or information. The code symbol comprises a plurality of nested polygonal elements of different sizes, each of which represents information for management.

Preferably, the polygonal elements is a quadrilateral element.

More preferably, each side of each element is selectively cut or left uncut so as to represent a binary digit. In this case, each side of each element may be selectively cut at an end thereof. Additionally and/or alternatively, each side of each element is selectively cut at the centre portion thereof. The length of a cutout is preferably 1/3 of the entire length of a corresponding side regardless of the position of the cutout.

Preferably, the polygonal elements respectively represent different kinds of information used for management.

A management mark of an embodiment of the invention is easily read on an article using a TV camera or the like while the article is being transported. In an embodiment, the management mark is reliably read even when slightly dirtied.

The present invention also provides a method of managing reception and shipment of articles. In this method, a reception/shipment management mark is provided on each article. The management mark consists of a two-dimensional code symbol which comprises a plurality of nested polygonal elements of different sizes, each of which represents information for management. The method comprises the steps of providing a reception/shipment management mark on each of a plurality of articles to be received, receiving the articles, detecting the management marks on the articles, decoding the management marks so as to obtain information for shipping management, and shipping the articles based on the information for shipping management.

In an embodiment, each said code symbol comprises four quadrilateral elements which represent different kinds of information items. For example, said information items may comprise a product name, a product number, a delivery destination, and a product origin.

Preferably, each side of each element is selectively cut or left uncut so as to represent a binary digit.

The present invention further provides apparatus for managing reception and shipment of articles each having at least one two-dimensional code symbol thereon, the code symbol comprising a plurality of nested polygonal elements of different sizes, each representing information, said apparatus comprising:
mark capturing and decoding means for optically reading code symbols of articles which are being transported and for decoding the code symbols to provide an instruction indicating at least a delivery destination; and
article shipping means responsive to the delivery destination instruction to appropriately direct the articles.

In an embodiment, said apparatus further comprises article aligning means for controlling the orientation of each of a plurality of articles which are received and transported along a reception line. Mark capturing means optically reads out the management marks of the articles while the articles are being transported. Mark decoding means may decode the management marks captured by the mark capturing means so as to sort out the article and output an instruction indicating at least a destination of delivery. The article shipping means responds to the instruction from the mark decoding means so as to transport articles, designated to be shipped, onto a shipment line, thereby carrying out shipping operation. The article shipping means may compare the number of articles received with the number of articles to be shipped. When the number of articles received is equal to or greater than the number of articles to be shipped, the article shipping means receives all or some of the received articles to obtain articles to be shipped. When the number of articles received is less than the number of articles to be shipped, the article shipping means receives all the received articles and additional articles from a storage section so as to obtain articles to be shipped.

Embodiments of the present invention will hereinafter be described, by way of example, with reference to the accompanying drawings, in which:
Fig. 1 is a block diagram of a reception/shipment managing apparatus according to an embodiment of the present invention;
FIGS. 2A - 2E are diagrams for explaining a reception/shipment management mark shown in FIG. 1;
FIG. 3 is a diagram showing an example of a collating table for the reception/shipment management mark shown in FIG. 2A;
FIGS. 4A - 4C are diagrams each showing a basic element of the reception/shipment management mark shown in FIG. 2A; and
FIG. 5 is a flowchart showing the operation of the reception/shipment managing apparatus shown in FIG. 1.

### DESCRIPTION OF THE EMBODIMENT

An embodiment of the present invention will now be described.

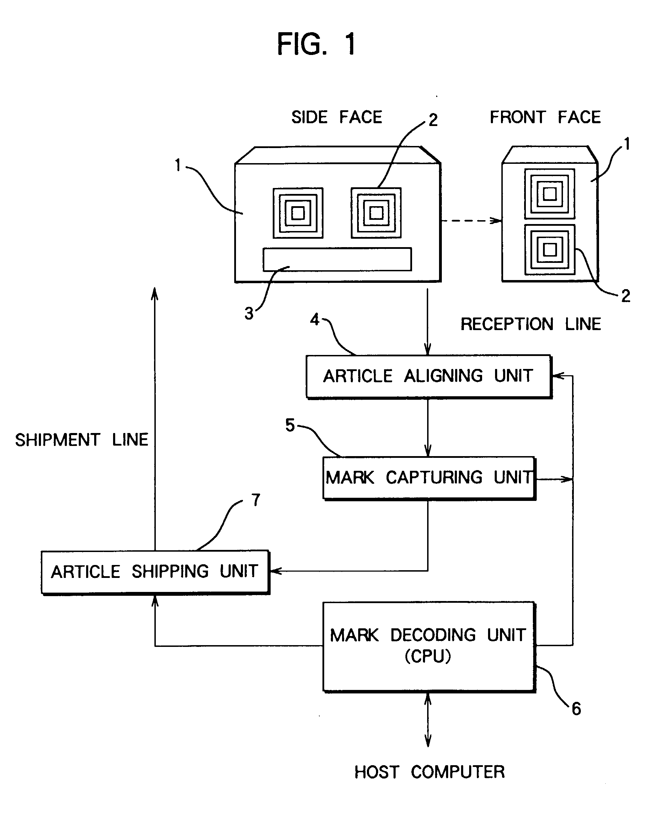

FIG. 1 shows a block diagram of a reception/shipment managing apparatus according to an embodiment of the present invention.

In FIG. 1, numeral 1 denotes an article, such as a farm product or an industrial product, packaged through use of a carton and being transported on an unillustrated conveyer line. In FIG. 1, the front and side faces of the article 1 are both shown. Numeral 2 denotes a reception/shipment management mark consisting of a box-shaped two-dimensional code symbol (hereinafter referred to as a "box code"). One or a plurality of such management marks are printed on each of the front and side faces. Numeral 3 denotes a space for writing therein the name of a production site and the name of a producer; for example, "Chiba Floriculture," or "Ibaraki Office Supplies Division."

Generally, a reception line (not illustrated) consists of several belt conveyers for transporting articles 1 from a reception truck into the interior of a center. Numeral 4 denotes an article aligning unit which controls the transport speed of each belt conveyer so as to separate the articles 1 from one another and align them.

Numeral 5 denotes a mark capturing unit provided along the reception line at a position where the reception line is curved toward an inventory/shipment line. The mark capturing unit 5 irradiates each article 1 using a light, and captures the marks 2 on the front and side faces using two TV cameras. Numeral 6 denotes a mark decoding unit (CPU), which performs decoding operation and which controls an overall operation of the transport line as well. That is, image data of the reception/shipment management marks 2 captured by the mark capturing unit 5 are input to the mark decoding unit 6, which decodes them. Subsequently, the mark decoding unit 6 updates management information based on the status of article reception, and sends the updated information to an unillustrated host computer. The mark decoding unit 6 also receives an article delivering command and other commands from the host computer.

Numeral 7 denotes an article shipping unit, which operates in accordance with a shipment command output from the mark decoding unit 6. Upon reception of the shipment command, the article shipping unit 7 compares the number of received articles with the number of articles to be shipped. When it is judged that shipment is possible, the article shipping unit 7 transports onto the shipment conveyer line a predetermined number of articles to be shipped. After the destination of delivery has been checked, the articles are loaded onto a shipment truck.

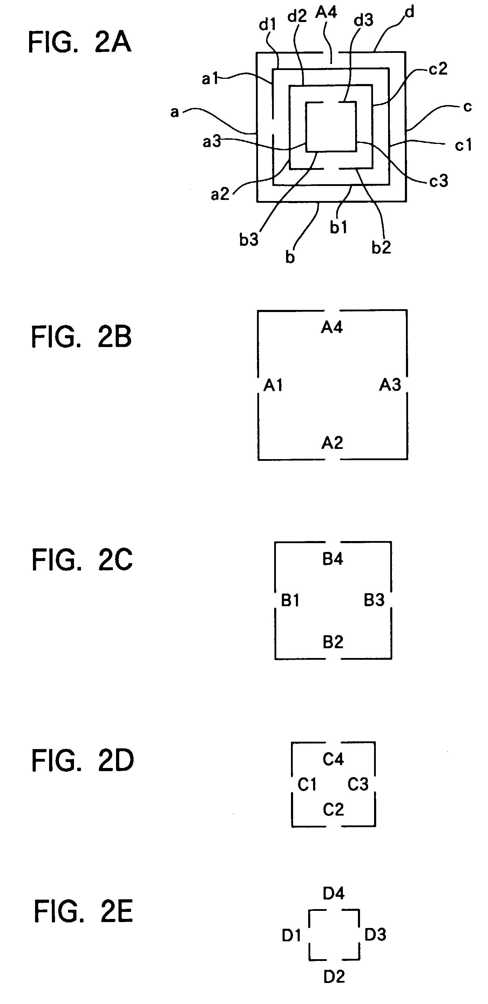

FIGS. 2A - 2E are diagrams for explaining a reception/shipment management mark shown in FIG. 1.

FIG. 2A shows an enlarged view of the reception/shipment management mark 2. This management mark 2 consists of a single box code, which comprises four concentrically disposed square elements of different sizes. Each side of each element is selectively cut or left uncut so as to represent binary information. That is, a complete side having no cutout represents "1," and a cut side having a cutout represents "0." For example, the outermost element of the management mark shown in FIG. 2A has sides a, b, c, and d; among which sides a, b, and c are not cut, but side d has a cutout A4. The cutout A4 is formed at the center of a side so as to facilitate judgment of the cut/uncut status.

Similarly, in the second element having sides a1, b1, c1, and d1, only side a1 has a cutout. In the third element having sides a2, b2, c2, and d2, only side b2 has a cutout. In the fourth element having sides a3, b3, c3, and d3, only side d3 has a cutout.

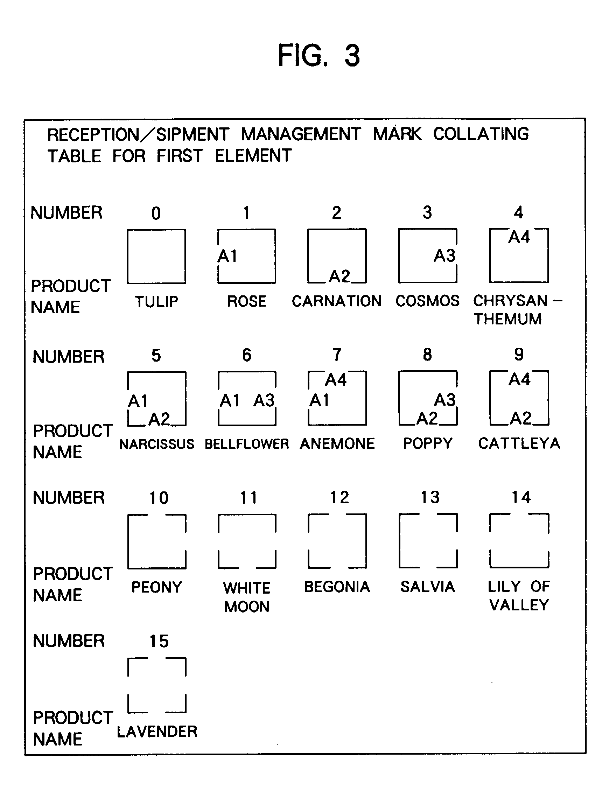

The four square elements of the reception/shipment management mark 2 correspond to management items such as a product name, a product number, a place to which the product is to be delivered (hereinafter referred to as a "delivery destination"), and a place from which the product has been received (hereinafter referred to as a "product origin"). When the outermost element is used for representing a product name, the outermost element can represent 2⁴ = 16 different product names through selective formation of cutouts. That is, the formation of cutouts can be performed in sixteen different ways including the case where none of the sides a, b, c, and d has a cutout and the case shown in FIG. 2B in which all the sides a, b, c, and d have respective cutouts A1, A2, A3, and A4. Accordingly, when products to be handled are flowers, sixteen kinds of major flowers (from tulip to lavender) are selected, and sixteen numbers (from 0 to 15) are assigned to these flowers. This makes it possible to represent these flowers by the outermost element of the box code, as shown in FIG. 3. The table shown in FIG. 3 is prepared in advance and is stored in a memory provided in the mark decoding unit 6. This table is referred to when the reception/shipment management mark 2 is decoded. However, the table shown in FIG. 3 is merely an example, and the contents of the table can set arbitrarily. The products are not limited to flowers, and may be electrical appliances such as compact disc players and TV sets; alcohol product and soft drinks such as canned beer, canned juice and canned coffee; or any other types of products. When the number of selected products for entry on the table exceeds the number of combinations that can be represented, it can be coped with by an increase in the number of the reception/shipment marks 2.

Similarly, when the second element shown in FIG. 2C is used for representing a product number, the second element can represent sixteen different product numbers by the combination of cutouts changing within the range from the case where none of the sides a1, b1, c1, and d1 has a cutout to the case shown in FIG. 2C in which all the sides a1, b1, c1, and d1 have respective cutouts B1, B2, B3, and B4. Accordingly, when the product represented by the first element is "chrysanthemum," sixteen different kinds, grades and the like of chrysanthemum can be represented by the second element. When the product represented by the first element is canned coffee, kinds, grades and the like of coffee can be represented by the second element.

When the third element shown in FIG. 2D is used for representing a delivery destination, the third element can represent sixteen different delivery destinations by the combination of cutouts changing within the range from the case where none of the sides a2, b2, c2, and d2 has a cutout to the case shown in FIG. 2D in which all the sides a2, b2, c2, and d2 have respective cutouts C1, C2, C3, and C4. Accordingly, when the product represented by the first element is flower, the name of a market such as East-Tama-Area Flower Market, South-Tama-Area Flower Market, North-Tama-Area Flower Market, or West-Tama-Area Flower Market can be represented as a delivery destination by the third element. When the product represented by the first element is an electric appliance, the name of an electrical store such as Nishishiba Electric, Yotsubishi Electric, Matsuue Electric, or Higure Electric can be represented as a delivery destination by the third element.

When the fourth element shown in FIG. 2E is used for representing a product origin, the fourth element can represent sixteen different product origins by the combination of cutouts changing within the range from the case where none of the sides a3, b3, c3, and d3 has a cutout to the case shown in FIG. 2E in which all the sides a3, b3, c3, and d3 have respective cutouts D1, D2, D3, and D4. Accordingly, when the product represented by the first element is flower, the name of a producer such as Chiba Floriculture, Kanagawa Flower Garden, or Ibaraki Agriculture can be represented as a product origin by the fourth element. When the product represented by the first element is an electrical appliance, the name of origin of the electrical appliance such as TKO Yamagata Division, Gunma Plant of Goyou Electric, or Tama Physical Distributing Center of Yotsubish Electric can be represented as a product origin by the fourth element.

Accordingly, from the reception/shipment management mark 2, required information can be obtained as follows. It is assumed that when the first element for a product name is 4, it represents "chrysanthemum"; that when the second element for a product number is 1, it represents "white and second grade"; that when the third element for a delivery destination is 2, it represents "Nishitama Flower"; and that when the fourth element for a product origin is 4, it represents "Kanagawa Flower." In this case, the following management items can be obtained from the management mark 2:
product name: chrysanthemum
product number: white, second grade
delivery destination: Nishitama Flower
product origin: Kanagawa Flower

In the above-described example, product name, product number, delivery destination, and product origin are used as reception/shipment management items. However, the reception/shipment management items are not limited to the above, and the contents and number of the management items may be freely determined based on the kind of business and the kinds of products to be handled. When the above-described management mark is applied to labeling for in-store marking or the like, management can be performed more efficiently than it can with a POS system in which bar codes are used as merchandise management marks. Especially, when the above-described management mark is applied to marking for a package of fish, vegetables, or meat, it becomes possible to provide in-store marking which can be read out much more easily and with fewer errors compared to the case where bar codes are used, thereby simplifying the management.

When an auxiliary item is added to the major items such as product name, product number, delivery destination, and product origin, a management mark representing the major items is printed on the front face of each article 1, and a management mark representing the auxiliary item is printed on the side face. If the above is determined based on a rule, flexibility can be increased. For example, when it is desired to add an item for representing the number of products, an additional reception/shipment management mark 2 is printed on the side of the article 1. When the first through fourth elements are respectively designated as the first through fourth digits of a four-digit number, the number of products can be displayed by using an arbitrary four-digit number (e.g., "4321").

When major items cannot be printed on the front face of the article 1 through use of a single reception/shipment management mark and/or when auxiliary items cannot be printed on the side face of the article 1 through the use of a single reception/shipment management mark, the number of reception/shipment management marks on each face can be increased to two or more. For example, in order to display the above-described four items through use of two marks, the first and second elements of the first mark are used for displaying a product name; the third and fourth elements of the first mark are used for displaying a product number; the first and second elements of the second mark are used for displaying a delivery destination; and the third and fourth elements of the second mark are used for displaying a product origin. The above-described method can be used not only for distribution management, but also for parts management and product management in a production line, as well as for other similar types of management systems.

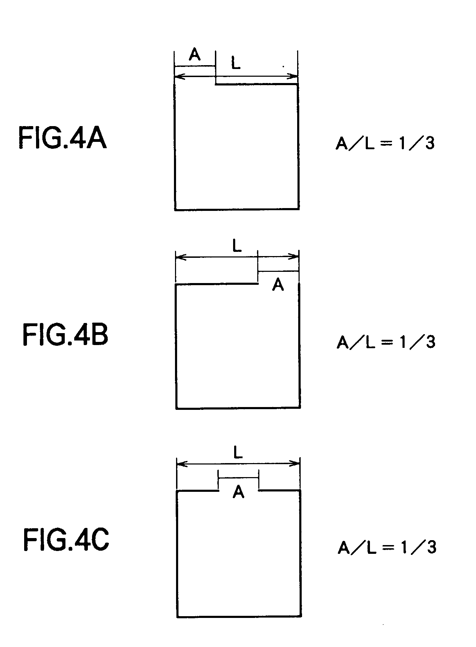

FIGS. 4A - 4C depict examples of basic elements usable for the reception/shipment management mark shown in FIG. 2A. Each of the examples of FIGS. 4A - 4C roughly shows the length and position of a cutout A in a cut side of the outermost element. In the example shown in FIG. 4A, a side is cut at the left end thereof, and the length of cutout A is about 1/3 of the entire length L. In the example shown in FIG. 4B, a side is cut at the right end thereof, and the length of cutout A is about 1/3 of the entire length L. In the example shown in FIG. 4C, a side is cut at the center thereof, and the length of cutout A is about 1/3 of the entire length L. The example shown in FIG. 4C is the same as the first element of the mark shown in FIG. 2A. So far, the outermost element of a management mark has been discussed, but the position of cutout A and the ratio of the length of cutout A to the entire length L in the first element are also applicable to the second through fourth elements. Also, any of the above-described three positions of a cutout can be selected in consideration of easiness in pattern matching operation during decoding.

Next, the operation of the present embodiment will be described.

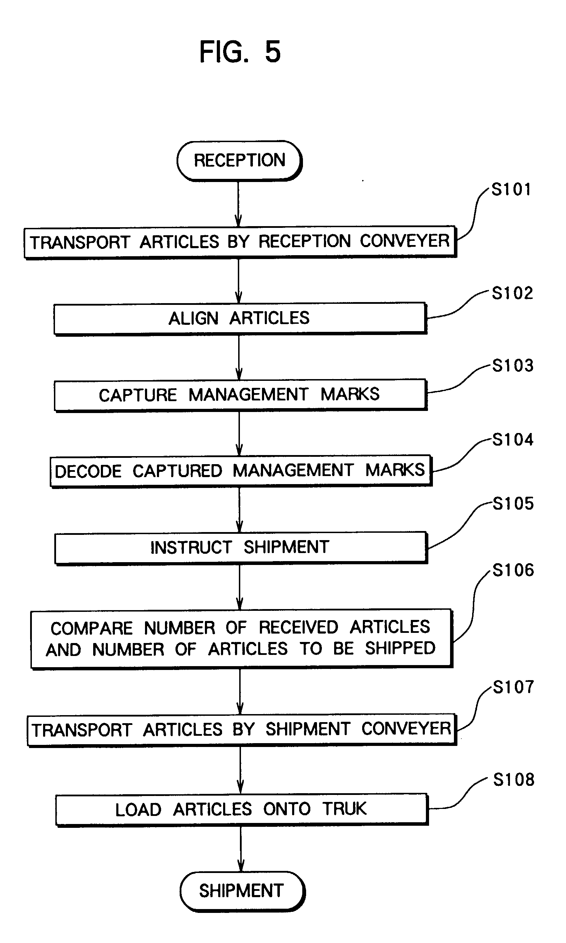

FIG. 5 shows the operation of the reception/shipment managing apparatus shown in FIG. 1.

When a truck arrives at a physical distribution center after carrying articles 1 from a product origin, the articles 1 are unloaded from the truck and placed on the belt conveyer of the reception line. Thus, the articles 1 are transported by the belt conveyer (S101).

The article aligning unit 4 controls the speed of a belt conveyer or roller conveyer for alignment through control of power source such as a motor or a compressor, so that the articles 1 are separated from one another and are oriented to face the same direction (S102).

When an article 1 reaches a position at which the transport speed on the reception line is decreased and at which the reception line is curved toward the shipment line, the mark capturing unit 5 irradiates light onto the front and side faces of the article 1, and captures reception/shipment management marks 2 by using two TV cameras. Image data representing thus-captured management marks 2 are fed to the mark decoding unit 6 (S103).

The mark decoding unit (CPU) 6 decodes the thus-input marks 2 with reference to the table shown in FIG. 3, which is held in the memory of the mark decoding unit 6. As a result, the following management data are decoded:
product name: chrysanthemum
product number: white, second grade
delivery destination: Nishitama Flower
product origin: Kanagawa Flower
number of products: 200
Subsequently, information regarding inventory is updated based on the information of the received articles. Thus-updated inventory information is sent, as management data, to the unillustrated host computer (S104). The host computer, which performs centralized control for physical distribution by using a suitable program such as Lotus 1-2-3, sends a delivery command to the mark decoding unit 6 based on information regarding an order (S105).

Upon reception of the delivery command from the host computer, the mark decoding unit 6 outputs a shipment command to the article shipment unit 7. Upon reception of the shipment command, the article shipment unit 7 checks the delivery destination and the number of articles to be shipped. Subsequently, the article shipping unit 7 compares the number of received articles with the number of articles to be shipped. When the number of articles to be shipped is equal to or smaller than the number of received articles, articles to be shipped are guided from the reception line to the plurality of belt conveyers of the shipment line through a branching operation utilizing ball casters. The remaining articles are guided to the inventory line so as to be stored as inventory. Each of the articles for storage has a management mark in which the third element for representing a delivery destination has no cutout (i.e., indicates "0"). When the number of articles to be shipped is larger than the number of received articles, stocked articles are taken out through the inventory line so as to compensate for the shortage (S106).

All the articles to be shipped are transported to the outside by the belt conveyers for shipment (S107), and are then loaded onto a truck. Subsequently, completion of the shipment work is communicated to the mark decoding unit 6 (S108).

The above-described embodiment utilizes, as a reception/shipment management mark, a box-shaped two-dimensional code symbol, which is simple, easily detected, and is not required to be accurately printed. Accordingly, it becomes possible to accurately read, from the front side, a reception/shipment management mark on an article being transported. Moreover, a plurality of reception/shipment management marks 2 can be captured simultaneously through use of a single camera. Therefore, it becomes unnecessary to stop the line for detection of the management marks 2, so operation efficiency is improved.

Since each management mark is simple and can be decoded by judging whether each side of each element is cut or left uncut, the management mark can be decoded without a problem, even when the management mark is slightly dirtied or is partly destroyed. Even when the management mark is hand written using marking ink, the management mark can be decoded with sufficient accuracy.

Although the case of a physical distribution center has been described, the present invention is not limited thereto. The present invention can be applied to personnel management, parts management, client management, and other types of management systems in which bar cbde symbols are presently used.

Obviously, numerous modifications and variations of the present invention are possible in light of the above teaching. It is therefore to be understood that within the scope of the appended claims, the present invention may be practiced otherwise than as specifically described herein.

## Claims

1. A two-dimensional code symbol used for managing articles or information, said code symbol comprising a plurality of nested polygonal elements of different sizes, each polygonal element representing information.

2. A two-dimensional code symbol as claimed in Claim 1, wherein each of said polygonal elements is a quadrilateral element.

3. A two-dimensional code symbol as claimed in Claim 1 or Claim 2, wherein each side of each element is selectively cut or left uncut so as to represent information.

4. A method of managing reception and shipment of articles, said method comprising the steps of:
providing on each article at least one two-dimensional code symbol, said code symbol comprising a plurality of nested polygonal elements of different sizes, each polygonal element representing information;
receiving said articles;
detecting said code symbols on said articles so as to obtain shipping information; and
shipping said articles based on the information detected.

5. A method as claimed in Claim 4, wherein each said code symbol comprises four quadrilateral elements which represent different kinds of information items, for example, a product name, a product number, a delivery destination, and a product origin.

6. Apparatus for managing reception and shipment of articles each having at least one two-dimensional code symbol thereon, the code symbol comprising a plurality of nested polygonal elements of different sizes, each representing information, said apparatus comprising:
mark capturing and decoding means for optically reading code symbols of articles which are being transported and for decoding the code symbols to provide an instruction indicating at least a delivery destination; and
article shipping means responsive to the delivery destination instruction to appropriately direct the articles.

7. Apparatus as claimed in Claim 6, wherein said article shipping means compares the number of articles received with the number of articles to be shipped, and when the number of articles received is equal to or greater than the number of articles to be shipped, said article shipping means receives all or some of the received articles to obtain articles to be shipped.

8. Apparatus as claimed in Claim 6 or Claim 7, wherein said article shipping means compares the number of articles received with the number of articles to be shipped, and when the number of articles received is less than the number of articles to be shipped, said article shipping means receives all of the received articles as well as additional articles from a storage section to obtain articles to be shipped.

9. Apparatus as claimed in any of Claims 6 to 8, wherein each of said code symbols comprises four quadrilateral elements which represent different kinds of information items.

10. Apparatus as claimed in Claim 9, wherein said information items comprise a product name, a product number, a delivery destination, and a product origin.

11. Apparatus as claimed in any of Claims 6 to 10, wherein each side of each element is selectively cut or left uncut so as to represent a binary digit.
